Europäisches Patentamt

European Patent Office

Office européen des brevets

(19)

(11) Numéro de publication : **0 330 556 B1**

(12)                    **FASCICULE DE BREVET EUROPEEN**

(45) Date de publication du fascicule du brevet :
**09.09.92 Bulletin 92/37**

(51) Int. Cl.⁵ : **B60S 13/02, A47F 5/025**

(21) Numéro de dépôt : **89400458.9**

(22) Date de dépôt : **17.02.89**

(54) **Présentoir rotatif pour véhicule automobile.**

(30) Priorité : **26.02.88 FR 8802424**

(43) Date de publication de la demande :
**30.08.89 Bulletin 89/35**

(45) Mention de la délivrance du brevet :
**09.09.92 Bulletin 92/37**

(84) Etats contractants désignés :
**BE CH DE ES GB IT LI LU NL SE**

(56) Documents cités :
**WO-A-87/01079**
**DE-A- 2 418 355**
**DE-A- 2 518 342**

(56) Documents cités :
**FR-A- 660 131**
**US-A- 1 408 379**
**US-A- 2 200 422**
**US-A- 2 244 598**
**US-A- 3 420 187**

(73) Titulaire : **Perrier, Marcel**
**22, Square des Fauvettes**
**F-95470 Saint-Witz (FR)**

(72) Inventeur : **Perrier, Marcel**
**22, Square des Fauvettes**
**F-95470 Saint-Witz (FR)**

(74) Mandataire : **Netter, André et al**
**Cabinet NETTER, 40, rue Vignon**
**F-75009 Paris (FR)**

EP 0 330 556 B1

# Description

L'invention concerne un présentoir rotatif pour véhicule automobile.

On connaît déjà des présentoirs de ce genre qui comprennent un socle propre à être posé horizontalement au sol, un support monté à rotation sur ce socle autour d'un axe vertical, deux poutres disposées parallèlement entre elles dans un même plan horizontal et montées à coulissement par rapport au support pour régler leur écartement en fonction de l'empattement du véhicule, et quatre palettes porteroues montées à coulissement aux extrémités des poutres pour supporter les quatres roues du véhicule en s'adaptant aux dimensions des voies avant et arrière de ce véhicule. Un tel présentoir est connu par exemple du DE-A-2 418 355.

La structure d'un tel présentoir comprend habituellement des tubes à section rectangulaire ou carrée qui sont montés télescopiquement les uns par rapport aux autres pour s'adapter à l'empattement et aux voies avant et arrière du véhicule à présenter. Ils sont ainsi adaptables aux dimensions et au poids des véhicules les plus courants et peuvent donc être utilisés pour l'animation d'un hall ou d'une exposition.

Dans les présentoirs connus, les palettes porteroues sont disposées à faible hauteur du sol, c'est-à-dire à une distance généralement inférieure à 10 cm. La mise en place d'un véhicule sur un présentoir se fait alors au moyen de rampes amovibles ou non qui permettent aux quatre roues du véhicule d'accéder aux palettes. Ces présentoirs sont, le plus souvent, équipés d'un moteur propre à entraîner le support en rotation autour de son axe vertical.

L'un des problèmes posé par les présentoirs rotatifs connus est qu'ils nécessitent un équilibrage aussi poussé que possible du véhicule, notamment dans le sens longitudinal, afin que le centre de gravité du véhicule se situe pratiquement dans l'axe de rotation précité. On évite ainsi une fatigue excessive des roulements du support et des organes moteur et on évite aussi qu'une palette porte-roue ne touche le sol, ce qui empêcherait la rotation du support.

Dans les présentoirs connus de ce genre, le support comporte habituellement un ou deux longerons horizontaux, chaque longeron recevant, à chacune de ses extrémités, un coulisseau qui est solidaire d'une des deux poutres.

De même, chacune des deux poutres reçoit, à chacune de ses extrémités, un coulisseau qui est solidaire d'une des palettes porte-roues.

Le réglage longitudinal des coulisseaux par rapport au(x) longeron(s) s'effectue à l'aide de vis de pression ou analogues en fonction de l'empattement du véhicule à exposer. Pour assurer l'équilibrage du véhicule sur le présentoir, il est nécessaire de procéder par approximations successives en montant et descendant ce dernier, à chaque fois, jusqu'à obtention de l'équilibrage souhaité.

Cette opération est particulièrement fastidieuse et longue à mettre en oeuvre et a pour conséquence de décourager les utilisateurs de ce type de présentoir, bien qu'ils soient conscients de l'intérêt de ce type d'appareils pour l'animation d'un hall ou d'une exposition.

C'est, en conséquence, l'un des buts de l'invention de procurer un présentoir pour véhicule automobile qui évite les inconvénients des présentoirs de la technique antérieure.

C'est, en particulier, un but de l'invention de procurer un tel présentoir qui peut s'adapter très rapidement et très facilement aux dimensions des véhicules à exposer.

C'est également un but de l'invention de procurer un présentoir de ce genre qui, permet une telle adaptation, sans qu'il soit nécessaire de descendre le véhicule au sol.

C'est encore un but de l'invention de procurer un tel présentoir qui peut être facilement démonté et transporté.

L'invention concerne plus particulièrement un présentoir rotatif pour véhicule automobile, du type défini en introduction. Selon une caractéristique essentielle de l'invention, ce présentoir comprend des moyens de maintien de l'écartement des deux poutres à la dimension d'empattement souhaitée, sous l'action du poids des roues du véhicule ; et des moyens de réglage de la position relative du support et de l'ensemble des poutres maintenues à l'écartement souhaité. Ceci permet de régler la position longitudinale du véhicule par rapport à l'axe de rotation du support, sans qu'il soit nécessaire de faire descendre le véhicule au sol.

Dans une première forme de réalisation de l'invention, les moyens de maintien d'écartement comprennent un jeu de quatre cales propres à être posées au sol et formant rampe d'accès aux palettes, chaque cale comportant un logement ouvert vers le haut pour recevoir une palette, ainsi qu'une surface d'appui horizontale propre à recevoir une roue du véhicule dans une position d'attente proche de la position utilisée par la roue lorsqu'elle se trouve posée sur la palette, ce qui permet d'immobiliser les palettes en translation sans que les roues portent sur les palettes. Dans cette forme de réalisation de l'invention, les moyens de réglage de position comprennent un organe d'actionnement intercalé entre l'une des deux poutres et le support, de manière à faire glisser le socle sur le sol alors que les palettes sont immobilisées en translation.

Dans une autre forme de réalisation de l'invention, les moyens de maintien d'écartement sont propres à fonctionner lorsque les quatre roues du véhicule reposent sur les palettes ; et les moyens de réglage de position agissent sur le coulissement des deux poutres par rapport au support, le socle étant fixe par rapport au sol.

Dans cette seconde forme de réalisation de l'invention, les moyens de maintien d'écartement peuvent comprendre, pour chaque palette, deux rampes d'extrémité déplaçables entre une position d'accès où elles permettent aux roues de monter sur les palettes et une position de blocage où elles immobilisent les roues sur les palettes correspondantes, ce qui permet de maintenir l'écartement même si les freins du véhicule sont desserrés.

En variante, les moyens de maintien de l'écartement peuvent comprendre des moyens de liaison entre les poutres, auquel cas il n'est plus nécessaire de prévoir des moyens de blocage des roues sur les quatre palettes.

On peut prévoir alors que chaque palette porte-roue soit montée pivotante autour d'un axe horizontal s'étendant dans la direction longitudinale de la poutre. Dans les deux formes de réalisation, les palettes porte-roue peuvent être amovibles afin d'éviter d'avoir à franchir la première palette avec le premier train de roues du véhicule, cette palette n'étant emboîtée sur la poutre correspondante qu'après le passage du premier train de roues et permettent aussi un réglage instantané de la longueur du présentoir en fonction de l'empattement du véhicule.

De préférence, le support est du type comprenant au moins un longeron creux horizontal dans lequel se déplacent deux coulisseaux solidaires respectivement des deux poutres. Selon l'invention, les deux coulisseaux sont des tubes creux et les moyens de liaison précités comprennent alors un profilé susceptible de coulisser à l'intérieur des deux coulisseaux et d'être immobilisé en translation par rapport à ces deux coulisseaux, et cela par rotation d'une fraction de tour autour de sa direction longitudinale, sous l'action d'une manette.

Le profilé précité, qui assure la liaison entre les poutres, agit alors à la manière d'un excentrique qui vient se bloquer en toute position désirée dans les deux coulisseaux solidaires respectivement des deux poutres.

Dans cette deuxième forme de réalisation de l'invention, les moyens de réglage de position comprennent des moyens de roulement, par exemple des plaques à aiguilles, facilitant le coulissement des deux poutres par rapport au support.

Dans la description détaillée qui suit, donnée seulement à titre d'exemple, on se réfère aux dessins annexés, sur lesquels :

– la figure 1 est une vue de dessus d'un présentoir rotatif conformément à la première forme de réalisation de l'invention ;

– la figure 2 est une vue latérale du présentoir de la figure 1 ;

– la figure 3 est une vue de dessus du présentoir ; les palettes et les rampes d'accès ayant été enlevées afin de permettre au train avant du véhicule de venir se positionner au contact des rampes avant ;

– la figure 4 est une vue partielle de dessus d'un présentoir conforme à la deuxième forme de réalisation de l'invention ;

– la figure 5 est une vue latérale du présentoir de la figure 4 ;

– la figure 6 est une vue à plus grande échelle d'une partie du présentoir de la figure 4 ;

– la figure 7 est une vue en coupe suivant la ligne VII-VII de la figure 6 ;

– la figure 8 est une vue en coupe suivant la ligne VIII-VIII de la figure 4 (dans une variante de réalisation) ;

– la figure 9 est une vue en coupe suivant la ligne IX-IX de la figure 4 ;

– la figure 10 est une vue en coupe suivant la ligne X-X de la figure 4 ;

– la figure 11 montre une rampe d'accès à une palette ;

– la figure 12 est une vue partielle de dessus d'un présentoir selon la deuxième forme de réalisation de l'invention, dans lequel chaque palette porte-roue est montée pivotante et amovible sur la poutre correspondante ;

– la figure 13 est une vue partielle de dessus d'une palette porte-roue du dispositif de la figure 12 ;

– la figure 14 est une vue d'extrémité de cette palette porte-roue ; et

– la figure 15 est une vue latérale de cette palette porte-roue.

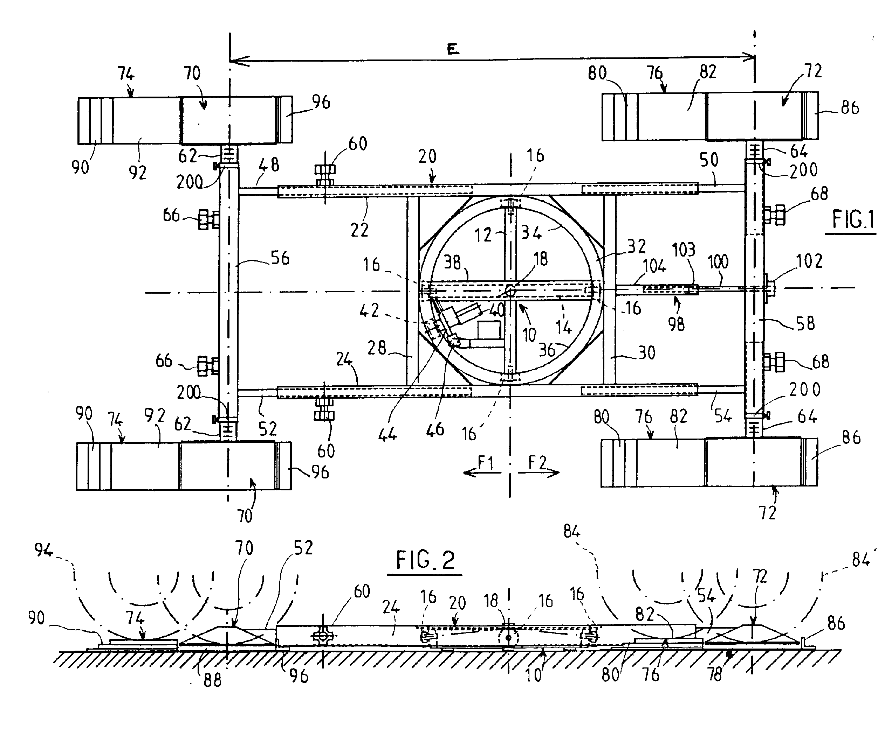

Le présentoir représenté aux figures 1 à 3 comprend un socle 10 propre à être posé horizontalement au sol. Ce socle comprend deux bras 12 et 14 formant croisillon et portant à leurs extrémités respectives quatre galets 16 montés chacun à rotation libre autour d'axes horizontaux ou obliques pour rattraper la différence de vitesse circonférentielle. Ces quatre galets sont situés à équidistance d'un axe vertical 18 qui s'étend verticalement vers le haut à partir du croisillon formé par les bras 12 et 14.

Sur l'axe 18 est monté à rotation un support 20, lequel comprend deux longerons horizontaux parallèles 22 et 24 reliés entre eux par deux traverses horizontales 28 et 30. Entre ces deux longerons et ces deux traverses est fixée une tôle 32 formant voie de roulement pour les galets 16. Cette tôle comporte deux ouvertures 34 et 36 séparées par une bande diamétrale 38 qui reçoit l'axe 18 ou un plat cintré relié par un plat.

Le support 20 peut être entraîné en rotation par l'intermédiaire d'un moto-réducteur 40 entraînant un galet 42 coopérant avec la voie de roulement de la tôle 32. Ce moto-réducteur est monté sur un bras pivotant 44 soumis à l'action d'un ressort 46 tendant à rappeler élastiquement le galet 42 en direction de la voie de roulement de la tôle 32.

Deux coulisseaux 48 et 50 sont montés à l'intérieur des deux extrémités du longeron 22 et deux autres coulisseaux 52 et 54 sont montés à coulissement à l'intérieur des deux extrémités du longeron 24. Les coulisseaux 48 et 52 sont fixés à une poutre transversale 56 tandis que les deux coulisseaux 50 et 54 sont fixés à une poutre transversale 58. Les deux poutres 56 et 58 s'étendent parallèlement entre elles dans un même plan horizontal et leur écartement peut être réglé en fonction de l'empattement E du véhicule à présenter.

Les longerons 22 et 24, de même que les coulisseaux 48, 50, 52 et 54 sont avantageusement constitués par des tubes de section rectangulaire ou carrée propres à assurer un montage télescopique des coulisseaux dans les longerons. Ces coulisseaux peuvent être bloqués dans les longerons respectifs au moyen de deux ou quatre vis de serrage 60.

La poutre 56 reçoit, à ses deux extrémités, deux coulisseaux 62 et, de façon correspondante, la poutre 58 reçoit à ses deux extrémités deux coulisseaux 64. Les poutres 56 et 58, de même que les coulisseaux 62 et 64 sont constitués par des tubes de section rectangulaire ou carrée pour permettre un montage télescopique. Le blocage en position des coulisseaux 62 peut être assuré par deux vis de serrage 66, tandis que celui des coulisseaux 64 peut être assuré par deux vis de serrage 68 montées sur les poutres et/ou sur des bagues carrées 200.

Les coulisseaux 62 supportent deux palettes porte-roues 70 et les deux coulisseaux 64 supportent deux palettes porte-roues 72. L'écartement entre les palettes 70 et l'écartement entre les palettes 72 peut être ainsi adapté aux dimensions des voies avant et arrière du véhicule à exposer.

Pour maintenir l'écartement entre les poutres 56 et 58, on prévoit un jeu de quatre cales, comprenant deux cales 74 pour les palettes 70 et deux cales 76 pour les palettes 72.

Dans la position d'utilisation du présentoir, le fond des quatre palettes se trouve à une faible distance du sol, pour permettre la rotation de l'ensemble autour de l'axe 18, sans que les palettes touchent le sol.

Les cales 76 sont identiques et formées, dans l'exemple, par un empilement de plaques de contre-plaqué ou analogue qui définissent un logement 78 pour la palette 72 (figure 2). Le logement 78 est encadré d'un côté par une rampe d'accès 80 qui aboutit à une surface d'appui horizontale 82 propre à recevoir une roue 84 dans une position d'attente et, de l'autre côté, par une butée 86. La position d'attente précitée est proche de la position d'utilisation de la roue lorsque celle-ci se trouve posée sur la palette 72 (position 84').

Les cales 74 sont également identiques et formées d'un empilement de plaques de contre-plaqué ou analogue. Elles définissent également un logement 88 ouvert vers le haut propre à recevoir la palette 70 (figure 2). Ce logement est encadré d'une part par une rampe d'accès 90 aboutissant à une surface d'appui horizontale 92 propre à recevoir une roue 94 dans une position d'attente. Le logement 88 est encadré, de l'autre côté, par une butée 96.

Le présentoir représenté aux figures 1 à 3 comporte en outre des moyens de réglage de la position relative du support et de l'ensemble des poutres 56 et 58 maintenues à l'écartement souhaité. Dans cette forme de réalisation, ces moyens de réglage de position comprennent un organe d'actionnement 98 intercalé entre la poutre 58 et la traverse 30 du support. L'organe d'actionnement 98 comprend une vis sans fin 100 disposée horizontalement dans la direction de coulissement des poutres. Cette vis sans fin 100 est munie d'une tête d'entraînement 102 solidaire en translation de la poutre 58 et elle coopère avec un écrou 103 monté à une extrémité d'un fourreau 104 qui est solidaire de la traverse 30 par son autre extrémité.

Le présentoir représenté aux figures 1 à 3 s'utilise de la façon suivante :

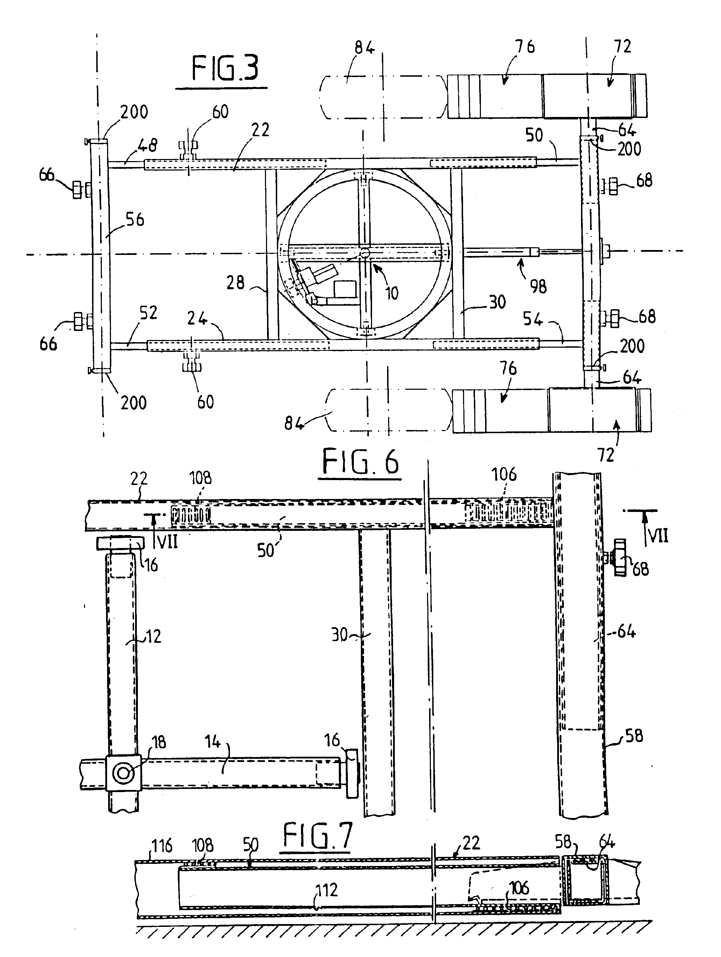

on règle l'écartement des palettes 70 et celui des palettes 72, en fonction des voies avant et arrière du véhicule à exposer, à l'aide des bagues 200. Les coulisseaux 62 et 64 peuvent être avantageusement munis chacun d'une échelle graduée en centimètres tous les cinq millimètres facilitant un réglage direct de l'écartement des palettes. Puis on enlève les palettes arrière 70. On met en place les deux cales 76 en les posant au sol et en les faisant coulisser latéralement de manière à venir se loger sous les palettes 72. On fait ensuite avancer le véhicule jusqu'à ce que les roues avant 84 soient à la base des cales 76 (figure 3). Il suffit, ensuite, de réemboîter les palettes arrière 70 et les cales arrière 74 et de faire coulisser vers l'arrière l'ensemble des palettes 70 et des cales 74 jusqu'à ce qu'elles viennent buter sur les roues du train arrière du véhicule pour avoir obtenu, automatiquement, le réglage correct de l'empattement E. On fait ensuite monter le véhicule sur les palettes par l'intermédiaire des cales 74 et 76.

Si l'on constate alors que le véhicule n'est pas correctement équilibré sur le présentoir, c'est-à-dire que son centre de gravité est décalé par rapport à l'axe 18, on déplace le véhicule de manière que ses roues viennent reposer sur les surfaces d'appui horizontales 82 et 92.

Le poids exercé par les quatre roues sur les quatre cales maintient ces dernières en position et immobilise de ce fait les quatre palettes qui sont retenues dans les logements respectifs desdites cales.

Il suffit alors d'entraîner en rotation la tête 102 de l'organe 98 dans un sens ou dans un autre pour faire glisser le socle 10 sur le sol soit dans un sens, soit en sens opposé (flèches F1 et F2 sur la figure 1). Ce déplacement est facilité par le fait que le véhicule ne repose pas sur les palettes mais sur les surfaces d'appui des cales. D'autre part, pour faciliter ce glissement on peut prévoir des plaquettes d'appui en matière plastique, ou analogue, fixées sous le support 10.

Il suffit ensuite de ramener le véhicule sur les palettes et de recommencer l'opération si nécessaire jusqu'à obtention de l'équilibrage. Lorsque cet équilibrage est obtenu, il suffit de bloquer les vis de serrage 60 et d'enlever les cales 74 et 76.

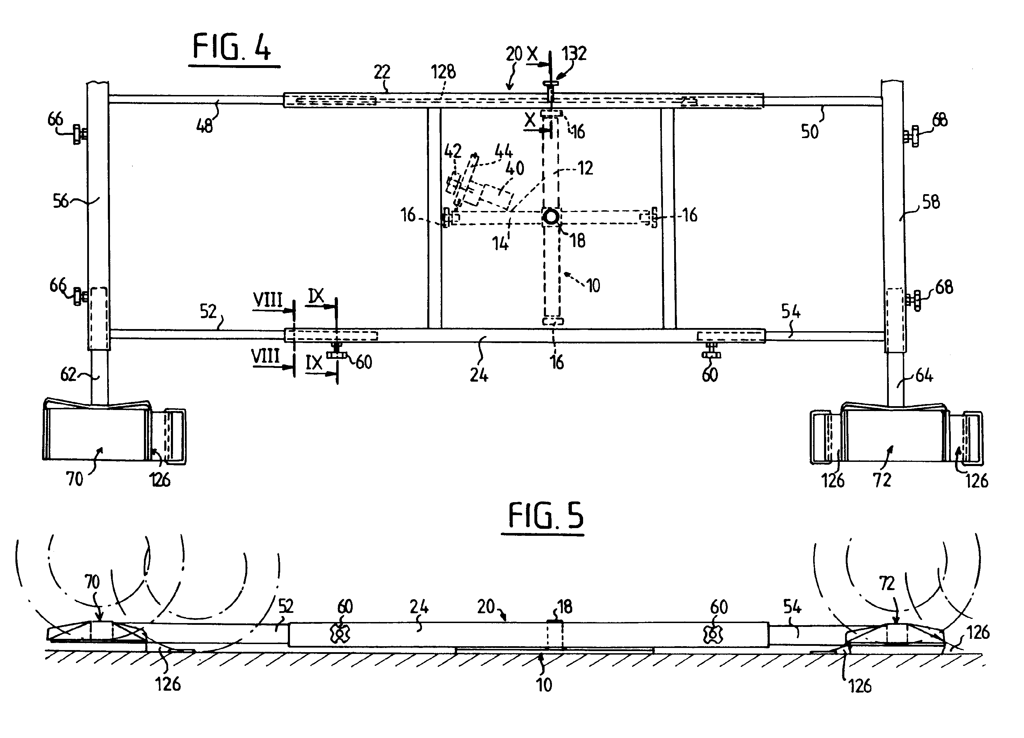

On se réfère maintenant aux figures 4 et 5 montrant une autre variante de réalisation de l'invention.

Le présentoir conforme à cette variante possède de nombreux éléments communs avec ceux du présentoir des figures 1 à 3. Ces éléments communs sont désignés sous les mêmes références numériques que précédemment.

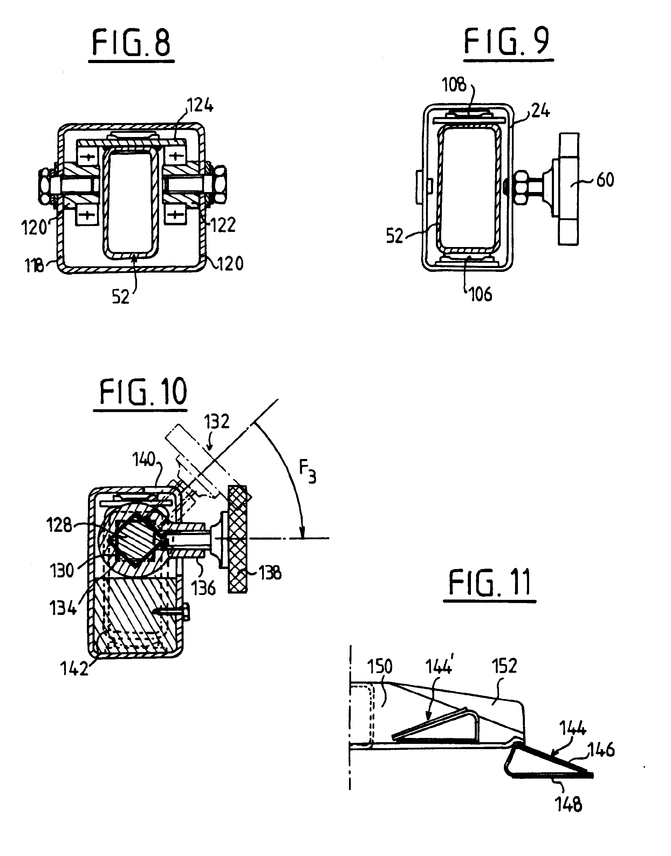

Dans cette variante de réalisation, le socle 10 est fixe au sol et l'équilibrage est obtenu alors que le véhicule est en place sur les palettes porte-roues, et cela par coulissement des coulisseaux 48 et 50 à l'intérieur du longeron 22 et coulissement des coulisseaux 52 et 54 à l'intérieur du longeron 24. Ce mouvement de coulissement est rendu possible par l'adjonction de moyens de roulement appropriés. Comme montré aux figures 6, 7 et 9, ces moyens de roulement comprennent pour chaque coulisseau, dans l'exemple le coulisseau 50 deux plaques à aiguilles 106 et 108, telles que disponibles dans le commerce. La plaque à aiguilles 106 est fixée à l'intérieur du longeron 22 et à proximité de son extrémité libre. Plus particulièrement cette plaque 106 est fixée sur la face supérieure de l'aile horizontale inférieure 110 du longeron 50 et est propre à coopérer avec l'aile horizontale inférieure 112 du coulisseau 50. La plaque 108 est fixée sur l'aile horizontale supérieure 114 du coulisseau 50 et est propre à coopérer avec la face interne de l'aile horizontale supérieure 116 du longeron 22.

En variante, on peut utiliser des roulements à billes latéraux comme montré à la figure 8. Dans cette forme de réalisation, le longeron 24, dans l'exemple considéré, doit avoir une section en largeur plus importante. A l'intérieur des ailes verticales 118 et 120 du longeron 24 sont montées deux séries de roulements à billes latéraux 120 et 122 qui coopèrent avec une plaque longitudinale horizontale 124 soudée sur l'aile supérieure du coulisseau correspondant 52.

Dans une première variante de réalisation, chacune des palettes comporte des rampes métalliques articulées 126 (figures 4 et 5) qui permettent au véhicule d'accéder sur les palettes. Ces rampes 126 peuvent être ensuite verrouillées en position verticale de façon que l'écartement entre les palettes 70 d'une part et 72 d'autre part soient maintenues, même si les freins du véhicule ne sont pas serrés ou si les freins sont serrés et n'immobilisent alors que le train avant ou le train arrière, comme c'est le cas habituellement.

Dans cette première variante, la procédure de mise en place du véhicule sur le présentoir est la suivante :

- on règle tout d'abord les voies avant et arrière par lecture directe sur les échelles graduées portées par les coulisseaux 62 et 64 ;
- on bloque ensuite les vis 66 et 68 pour maintenir l'écartement en largeur entre les deux palettes 70 et l'écartement en largeur entre les deux palettes 72 ;
- on règle ensuite l'empattement et on bloque les vis 60 ;
- on fait ensuite monter le véhicule sur les palettes par l'intermédiaire des rampes 126 ;
- on relève ensuite les rampes métalliques 126 en position verticale, l'écartement longitudinal des palettes étant maintenu constant par le véhicule lui-même dont les quatre roues ont été ainsi immobilisées par les rampes 126 ;
- on desserre ensuite les vis de blocage 60 et on recherche l'équilibre longitudinal par simple poussée du véhicule puis on verrouille ensuite les vis 60 lorsque l'équilibrage est atteint.

Dans une autre variante de réalisation, les moyens de maintien de l'écartement E entre les poutres 56 et 58 comprennent des moyens de liaison comprenant (figures 4 et 10) un profilé de liaison 128 susceptible de coulisser à l'intérieur des coulisseaux 48 et 50 et d'être immobilisé en translation par rapport à ces derniers. Les coulisseaux 48 et 50 sont des tubes creux de section rectangulaire dont les ailes correspondant aux grands côtés du rectangle s'étendent verticalement (figure 10). Le profilé de liaison 128 a une section carrée, dont la largeur des arêtes est inférieure à la plus petite dimension interne du profilé rectangulaire constituant les coulisseaux 52 et 54. Le profilé 128 est propre à coulisser à l'intérieur d'un logement 130 (figure 10) que ménage une manette 132. Cette manette comprend un corps cylindrique 134 d'axe horizontal ménageant le logement 130. Ce corps est prolongé latéralement par une douille cylindrique 136 qui est filetée intérieurement et qui reçoit une vis 138. La douille 136 passe à travers une lumière 140 ménagée dans le longeron 22.

Le corps cylindrique 134 repose sur une plaque d'appui 142 et l'ensemble peut ainsi être entraîné en rotation autour d'un axe fixe horizontal.

La manette 132 peut être déplacée d'une position inclinée à 45° (comme représenté en pointillé sur la figure 10) dans laquelle les faces du profilé 128 s'étendent parallèlement aux faces des coulisseaux 52 et 54 à une position horizontale (représenté en trait plein sur la figure 10) dans laquelle les faces du profilé 128 sont inclinées sensiblement à 45° par rapport à l'horizontale. Dans cette position, trois des arêtes du profilé 128 viennent se bloquer contre trois faces internes de chacun des coulisseaux 48 et 50. Pour maintenir la manette dans la position de blocage, il suffit alors d'entraîner en rotation la vis 128 dont l'extrémité libre provoque l'appui du profilé 128 sur les coulisseaux 52 et 54. L'adhérence des arêtes du profilé 128 en position de verrouillage peut être accrue par l'adjonction d'une matière anti-dérapante, par exemple un enrobé plastique, à chaque extrémité ou en faisant passer ces extrémités dans une filière de telle sorte que l'on provoque un meilleur accrochage longitudinal.

Ainsi, dans cette forme de réalisation, il n'est pas nécessaire de prévoir de vis 60 sur le profilé 22, mais seulement sur le profilé 24.

Dans cette forme de réalisation, l'accès aux palettes est obtenu par des rampes métalliques 144 (figure 11) en tôles d'acier soudées, revêtues sur leurs deux plus grandes faces de plaques 146 et 148 de caoutchouc antidérapant.

Ces rampes peuvent être également portées par la palette, comme montré en 144' pour maintenir la roue correspondante.

Dans cette variante de réalisation, la procédure de mise en place du véhicule est la suivante :

– on règle tout d'abord l'écartement latéral des palettes comme décrit précédemment ;

– on règle ensuite l'écartement longitudinal des palettes en fonction de l'empattement et,

– l'on verrouille à la position adéquate par simple abaissement de la manette 132 comme indiqué par la flèche F3 sur la figure 10 ;

– le profilé 128 vient se verrouiller à l'intérieur des coulisseaux 48 et 50 et les rend ainsi solidaires tout en permettant une translation longitudinale de l'ensemble ;

– on met ensuite en place les rampes 144 et on serre la vis moletée 138 pour immobiliser l'ensemble ;

– on fait ensuite monter le véhicule et l'on enlève les rampes 144 par basculement ;

– ensuite, on desserre la vis moletée 138 pour permettre la translation de l'ensemble et la recherche de l'équilibrage longitudinal par simple poussée sur le véhicule ;

– ensuite, on verrouille l'ensemble par simple resserrage de la vis moletée 138.

Dans les différentes formes de réalisations précitées, chacune des palettes peut comporter un bord interne vertical 150 (figure 11) qui va en s'évasant, des deux côtés, pour former des bords 152 de recentrage des roues.

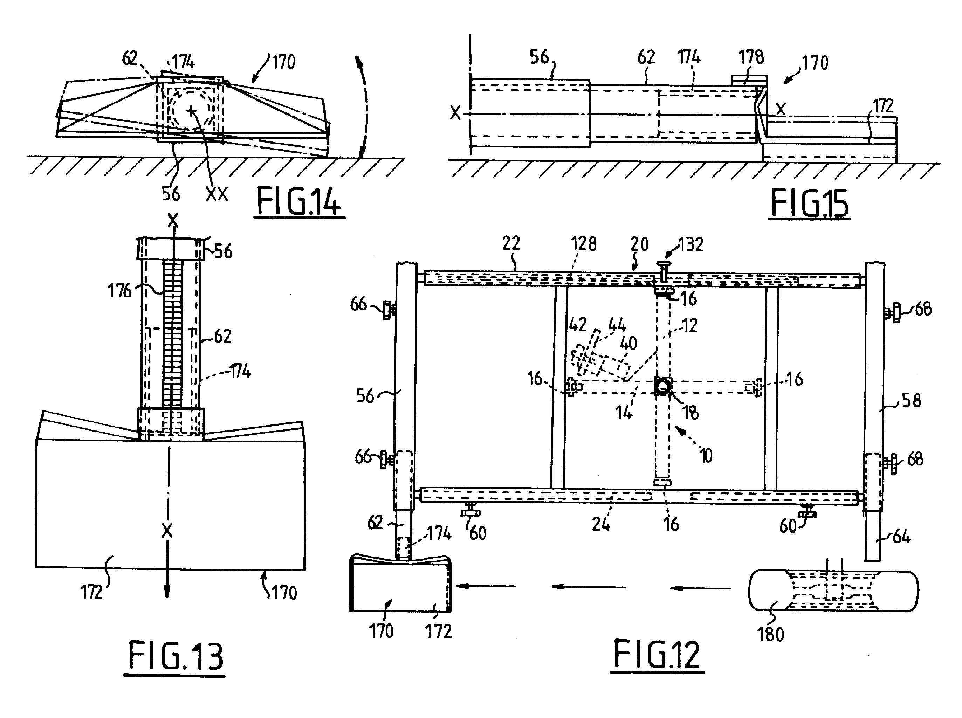

On se réfère maintenant aux figures 12 à 15. Le présentoir représenté à la figure 12 s'apparente à celui représenté à la figure 4. Toutefois, dans ce cas particulier, chaque palette porte-roue 170 est montée pivotante et amovible sur la poutre 56 ou 58 correspondante. Ceci permet, d'une part, d'éviter les rampes d'accès aux palettes et, d'autre part, d'éviter d'avoir à franchir la première palette avec le premier train de roues du véhicule, cette palette n'étant emboîtée sur la poutre correspondante qu'après le passage du premier train de roues.

Comme montré sur les figures 12 à 15, chaque palette 170 est constituée d'une tôle 172 pliée à angle droit et soudée à un tube circulaire 174 propre à s'emboîter librement dans le coulisseau 62. Ce coulisseau s'emboîte dans la poutre 56 et permet un réglage en largeur en fonction de la voie de chaque véhicule.

La face supérieure du coulisseau 62 comporte une échelle 176 graduée en centimètres, tous les cinq millimètres, ce qui permet de régler en lecture directe l'écartement des palettes en fonction de la voie avant ou arrière de chaque véhicule.

Par gravité, la palette oscillante 170 repose sur le sol en position oblique (comme montré en trait fin sur la figure 14), ce qui permet la montée des roues du véhicule. Lorsque les roues du véhicule ont légèrement dépassé l'axe XX de pivotement de la palette, cette dernière bascule pour venir dans une position horizontale (comme montré en trait fort sur la figure 14). Cette rotation de la palette est bloquée par l'appui d'un butoir 178 prévu sur la face supérieure du coulisseau 62.

Le présentoir de la figure 12 s'utilise de la façon suivante. Après avoir réglé les quatres coulisseaux à la largeur voulue en fonction des voies du véhicule, on ne monte par emboîtement que les palettes oscillantes se trouvant à l'opposé du véhicule dans le sens d'accès de ce dernier. Dans l'exemple, on monte uniquement les deux palettes sur la poutre 56, tandis que les coulisseaux 64 portés par la poutre 58 restent sans palette. Ceci permet le passage du premier train de roues 180 du véhicule (figure 12). Une fois que ce premier train de roues se trouve devant les palettes portées par la poutre 56, il suffit d'enfiler la deuxième paire de palettes oscillantes sur les coulisseaux 64 de la poutre 58, la mise en position du véhicule s'effectuant en continuant d'avancer le véhicule dans le sens des flèches indiqué sur la figure 12.

On évite ainsi la contrainte que représente le passage du premier train de roues dans le sens de l'avancée sur les premières palettes, cette opération ayant en général pour effet de secouer violemment le présentoir.

Bien entendu, l'invention s'applique également à des présentoirs comportant un seul longeron horizontal dans lequel coulissent deux coulisseaux, chacun des coulisseaux étant solidaire d'une des poutres transversales.

En outre, le socle du présentoir n'est pas limité à un socle de type croisillon, mais pourrait être également constitué par un socle circulaire.

## Revendications

1. Présentoir rotatif pour véhicule automobile, comprenant un socle (10) propre à être posé horizontalement au sol, un support (20) monté à rotation sur ce socle autour d'un axe vertical (18), deux poutres (56,58) disposées parallèlement entre elles dans un même plan horizontal et montées à coulissement par rapport au support pour régler leur écartement en fonction de l'empattement (E) du véhicule et quatre palettes porte-roues (70,72) montées à coulissement aux extrémités des poutres (56,58) pour supporter les quatre roues du véhicule en s'adaptant aux dimensions des voies avant et arrière de ce dernier, caractérisé en ce qu'il comprend des moyens de maintien (74,76,128) de l'écartement des deux poutres (56,58) à la dimension d'empattement souhaitée sous l'action du poids des roues du véhicule ; et des moyens de réglage (98) de la position relative du socle (10) et de l'ensemble des poutres maintenues à l'écartement souhaité, ce qui permet de régler la position longitudinale du véhicule par rapport à l'axe de rotation du support sans qu'il soit nécessaire de faire descendre le véhicule au sol.

2. Présentoir selon la revendication 1, caractérisé en ce que les moyens de maintien d'écartement comprennent un jeu de quatre cales (74,76) propres à être posées au sol et à former rampe d'accès, chaque cale comprenant un logement (78,88) ouvert vers le haut pour recevoir une palette (72, 70) et une surface d'appui horizontale (82,92) propre à recevoir une roue du véhicule dans une position d'attente proche d'une position d'utilisation obtenue lorsque la roue se trouve posée sur la palette, ce qui permet d'immobiliser les palettes en translation sans que les roues portent sur les palettes ; et en ce que les moyens de réglage de position comprennent un organe d'actionnement (98) intercalé entre l'une (58) des deux poutres et le support de manière à faire glisser le socle sur le sol alors que les palettes sont immobilisées en translation.

3. Présentoir selon la revendication 2, caractérisé en ce que l'organe d'actionnement (98) comprend une vis sans fin (100) disposée horizontalement dans la direction de coulissement des poutres, ladite vis sans fin étant munie d'une tête d'entraînement (102) solidaire en translation de l'une (58) des deux poutres et coopérant avec un fourreau (104) fileté intérieurement qui est solidaire du support.

4. Présentoir selon la revendication 1, caractérisé en ce que les moyens de maintien d'écartement sont propres à fonctionner lorsque les quatres roues du véhicule reposent sur les palettes (70,72) et en ce que les moyens de réglage de position agissent sur le coulissement des deux poutres (56,58) par rapport au support, le socle (10) étant fixe par rapport au sol.

5. Présentoir selon la revendication 4, caractérisé en ce que les moyens de maintien d'écartement comprennent, pour chaque palette, deux rampes d'extrémité (126) déplaçables entre une position d'accès où elles permettent aux roues de monter sur les palettes et une position de blocage où elles immobilisent les roues sur les palettes correspondantes, ce qui permet de maintenir l'écartement, même si les freins du véhicule sont desserrés.

6. Présentoir selon la revendication 4, caractérisé en ce que les moyens de maintien de l'écartement comprennent des moyens de liaison (128) entre les poutres.

7. Présentoir selon la revendication 6, caractérisé en ce que chaque palette porte-roue est montée pivotante autour d'un axe horizontal s'étendant dans la direction longitudinale de la poutre (56,58) et est montée amovible sur la poutre.

8. Présentoir selon l'une des revendications 6 et 7, dans lequel le support comprend au moins un longeron creux horizontal (22) dans lequel se déplacent deux coulisseaux (48,50) solidaires respectivement des deux poutres, caractérisé en ce que les deux coulisseaux sont des tubes creux et en ce que les moyens de liaison comprennent un profilé (128) susceptible de coulisser à l'intérieur des deux coulisseaux et d'être immobilisé en translation par rapport à ces deux coulisseaux, par rotation d'une fraction de tour autour de sa direction longitudinale, sous l'action d'une manette (132).

9. Présentoir selon la revendication 8, caractérisé en ce que les coulisseaux (48,50) sont des tubes de section générale rectangulaire et le profilé de liaison (128) a une section carrée, ce profilé coulissant librement à l'intérieur d'un logement (130) que ménage la manette (132), cette dernière traversant une lumière (140) du longeron (22) et étant munie d'une mollette de serrage (138).

10. Présentoir selon l'une des revendications 4 à 9, caractérisé en ce que les moyens de réglage de position comprennent des roulements telles que des plaques à aiguilles (106,108) facilitant le coulissement des deux poutres par rapport au support.

11. Présentoir selon l'une des revendications 1 à 10, caractérisé en ce que chaque palette comporte un bord interne (150) généralement vertical qui va en s'évasant pour former des bords (152) de recentrage des roues.

12. Présentoir selon l'une des revendications 1 à 11, caractérisé en ce que le socle (10) comprend un croisillon à bras horizontaux, quatre galets (16) montés à rotation libre aux extrémités du croisillon, autour d'axes respectifs horizontaux, et un galet d'entraînement (42) couplé à un moto-réducteur (40), lesdits galets coopérant avec une voie de roulement annulaire prévue à la partie inférieure du support.

## Patentansprüche

1. Präsentationsdrehscheibe für ein Kraftfahrzeug mit einem Sockel (10), der horizontal auf den Boden gestellt werden kann, einer um eine vertikale Achse (18) drehbar auf diesen Sockel montierten Stütze (20), zwei Trägern (56, 58), die parallel zueinander in derselben horizontalen Ebene angeordnet und bezüglich der Stütze gleitend montiert sind, so daß ihr Abstand in Abhängigkeit vom Radstand (E) des Fahrzeugs eingestellt werden kann, und mit vier Radhalterplatten (70, 72), die zum Stützen der vier Fahrzeugräder durch Anpassung an die vordere und hintere Spurabmessung des Fahrzeugs gleitend an den Enden der Träger (56, 58) montiert sind, dadurch gekennzeichnet, daß sie Mittel (74, 76, 128) umfaßt, die den Abstand der beiden Träger (56, 58) in Übereinstimmung mit der unter der Einwirkung des Fahrzeugrädergewichts gewünschten Radstandabmessung halten, sowie Mittel (98) zur Einstellung der relativen Position des Sockels (10) und der Gesamtheit der auf dem gewünschten Abstand gehaltenen Träger, wodurch die Längsposition des Fahrzeugs bezüglich der Drehachse der Stütze eingestellt werden kann, ohne daß das Fahrzeug auf den Boden abgesenkt werden muß.

2. Präsentationsscheibe nach Anspruch 1, dadurch gekennzeichnet, daß die Mittel zum Halten des Abstandes einen Satz aus vier Blöcken (74, 76) umfassen, die zur Bildung einer Auffahrtrampe auf den Boden gelegt werden können, wobei jeder Block eine nach oben offene Lagerung (78, 88) zur Aufnahme einer Platte (72, 70) und eine horizontale Abstützfläche (82, 92) umfaßt, die ein Fahrzeugrad in einer Bereitschaftsposition in der Nähe einer Einsatzposition aufnehmen kann, die erhalten wird, wenn sich das Rad auf der Platte befindet, wodurch die Platten verschiebefest gemacht werden können, ohne daß die Räder auf die Platten einwirken, und dadurch daß die Mittel zur Einstellung der Position ein so zwischen einem (58) der beiden Träger und der Stütze eingefügtes Betätigungselement (98) umfassen, daß der Sockel auf dem Boden gleitet, während die Platten verschiebefest gemacht werden.

3. Präsentationsscheibe nach Anspruch 2, dadurch gekennzeichnet, daß das Betätigungselement (98) eine horizontal in der Gleitrichtung der Träger angeordnete Endlosschraube (100) umfaßt, die einen Antriebskopf (102) aufweist, der verschiebefest mit einem (58) der beiden Träger verbunden ist und mit einer Hülse (104), die ein Innengewinde aufweist und fest mit der Stütze verbunden ist, zusammenwirkt.

4. Präsentationsscheibe nach Anspruch 1, dadurch gekennzeichnet, daß die Mittel zum Halten des Abstandes zum Einsatz kommen, wenn die vier Fahrzeugräder auf den Platten (70, 72) ruhen, und dadurch daß die Mittel zur Einstellung der Position auf, das Gleiten der beiden Träger (56, 58) bezüglich der Stütze wirken, wobei der Sockel (10) bezüglich des Bodens feststeht.

5. Präsentationsscheibe nach Anspruch 4, dadurch gekennzeichnet, daß die Mittel zum Halten des Abstandes für jede Platte zwei Endrampen (126) umfassen, die zwischen einer Auffahrtsposition, in der die Räder auf die Platten auffahren können, und einer Verriegelungsposition, in der sie die Räder auf den entsprechenden Platten feststellen, verschiebbar sind, wodurch der Abstand auch dann gehalten werden kann, wenn die Bremsen des Fahrzeugs gelöst sind.

6. Präsentationsscheibe nach Anspruch 4, dadurch gekennzeichnet, daß die Mittel zum Halten des Abstandes Verbindungsmittel (128) zwischen den Trägern umfassen.

7. Präsentationsscheibe nach Anspruch 6, dadurch gekennzeichnet, daß jede Radhalterplatte so montiert ist, daß sie um eine sich in der Längsrichtung des Trägers (56, 58) verlaufende horizontale Achse schwenkt und sich auf dem Träger bewegen kann.

8. Präsentationsscheibe nach Anspruch 6 oder 7, bei der die Stütze mindestens einen horizontalen hohlen Holm (22) umfaßt, in dem sich zwei jeweils mit den beiden Trägern fest verbundene Gleitstücke (48, 50) bewegen, dadurch gekennzeichnet, daß es sich bei den beiden Gleitstücken um hohle Rohre handelt und daß die Verbindungsmittel ein Profil (128) umfassen, das im Innern der beiden Gleitstücke gleiten und durch eine Teilumdrehung in seiner Längsrichtung unter der Einwirkung eines Bedienungshebels (132) bezüglich dieser beiden Gleitstücke verschiebefest gemacht werden kann.

9. Präsentationsscheibe nach Anspruch 8, dadurch gekennzeichnet, daß es sich bei den Gleitstücken (48, 50) um Rohre mit allgemein rechteckigem querschnitt handelt und das Verbindungsprofil (128) einen quadratischen Querschnitt hat, wobei dieses Profil frei im Innern einer Lagerung (130), die durch den Bedienungshebel (132) vorgesehen ist, gleitet, der durch ein Langloch (140) des Holms (22) geht und ein Feststellrädchen (138) aufweist.

10. Präsentationsscheibe nach einem der Ansprüche 4 bis 9, dadurch gekennzeichnet, daß die Mittel zur Einstellung der Position Lager wie etwa Nadellager (106, 108) umfassen, die das Gleiten der beiden Träger bezüglich der Stütze erleichtern.

11. Präsentationsscheibe nach einem der Ansprüche 1 bis 10, dadurch gekennzeichnet, daß jede Platte einen im allgemeinen vertikalen Innenrand (150) umfaßt, der sich zur Bildung von Rändern (152) zur erneuten Radzentrierung allmählich ausweitet.

12. Präsentationsscheibe nach einem der Ansprüche 1 bis 11, dadurch gekennzeichnet, daß der Sockel (10) ein Armkreuz mit horizontalen Armen, vier Rollen (16), die freidrehend um die jeweiligen horizontalen Achsen an den Enden des Armkreuzes montiert sind, und eine Antriebsrolle (42) umfaßt, die an einen Getriebemotor (40) gekoppelt ist, wobei jene Rollen mit einer am unteren Teil der Stütze vorgesehenen, ringförmigen Rollenbahn zusammenwirken.

**Claims**

1. Rotary display unit for a motor vehicle, comprising a base (10) adapted to be placed horizontally on the ground, a support (20) mounted on this base so as to rotate about a vertical axis (18), two beams (56, 58) disposed parallel with one another in the same horizontal plane and mounted slideably with respect to the support so as to adjust their separation as a function of the wheelbase (E) of the vehicle and four wheel-carrying plates (70, 72) slideably mounted at the ends of the beams (56, 58) so as to support the four wheels of the vehicle by adapting to the dimensions of the front and rear tracks of the latter, characterised in that it comprises means (74, 76, 128) for maintaining the separation of the two beams (56, 58) at the wheelbase dimension required under the action of the weight of the wheels of the vehicle; and means (98) for adjusting the relative position of the base (10) and of the assembly of the beams maintained at the separation required, this making it possible to adjust the longitudinal position of the vehicle with respect to the axis of rotation of the support without it being necessary to lower the vehicle to the ground.

2. Display unit according to Claim 1, characterised in that the means for maintaining separation comprise a set of four blocks (74, 76) adapted to be placed on the ground and to form an access ramp, each block comprising a housing (78, 88) open towards the top so as to receive a plate (72, 70) and a horizontal bearing surface (82, 92) adapted to receive a wheel of the vehicle in a stand-by position close to a utilisation position obtained when the wheel is placed on the plate, this making it possible to immobilise the plates in translation without the wheels bearing on the plates; and in that the position adjustment means comprise an actuation member (98) interposed between one (58) of the two beams and the support so as to cause the base to slide on the ground while the plates are immobilised in translation.

3. Display unit according to Claim 2, characterised in that the actuation member (98) comprises an endless screw (100) disposed horizontally in the direction of sliding of the beams, the said endless screw being fitted with a drive head (102) locked in translation to one (58) of the two beams and cooperating with an internally threaded sleeve (104) which is securely attached to the support.

4. Display unit according to Claim 1, characterised in that the means for maintaining separation are adapted to operate when the four wheels of the vehicle rest on the plates (70, 72) and in that the position adjustment means act on the sliding of the two beams (56, 58) with respect to the support, the base (10) being fixed with respect to the ground.

5. Display unit according to Claim 4, characterised in that the means for maintaining separation comprise, for each plate, two end ramps (126) movable between an access position where they permit the wheels to climb onto the plates and a blocking position where they immobilise the wheels on the corresponding plates, this making it possible to maintain the separation, even if the brakes of the vehicle are not applied.

6. Display unit according to Claim 4, characterised in that the means for maintaining the separation comprise means (128) for linking between the beams.

7. Display unit according to Claim 6, characterised in that each wheel-carrying plate is mounted so as to pivot about a horizontal axis extending in the longitudinal direction of the beam (56, 58) and is detachably mounted on the beam.

8. Display unit according to either of Claims 6 and 7, in which the support comprises at least one horizontal hollow member (22) in which move two slides (48, 50) securely attached respectively to the two beams, characterised in that the two slides are hollow tubes and in that the linking means comprise a section (128) capable of sliding inside the two slides and of being locked in translation with respect to these two slides, by rotation through a fraction of a revolution about its longitudinal direction, under the action of a handle (132).

9. Display unit according to Claim 8, characterised in that the slides (48, 50) are tubes of rectangular general cross-section and the link section (128) has a square cross-section, this section sliding freely inside a housing (130) allowed for by the handle (132), the latter passing through an opening (140) of the member (22) and being fitted with a knurled wheel (138) for tightening.

10. Display unit according to any of Claims 4 to 9, characterised in that the position adjustment means comprise rolling bearings such as plates with needles (106, 108) facilitating the sliding of the two beams with respect to the support.

11. Display unit according to any of Claims 1 to 10, characterised in that each plate comprises a generally vertical inner edge (150) which flares progressively so as to form edges (152) for recentring the wheels.

12. Display unit according to any of Claims 1 to 11, characterised in that the base (10) comprises a cross-pin having horizontal arms, four rollers (16) mounted so as to rotate freely at the ends of the cross-pin about horizontal respective axes, and a drive roller (42) coupled to a speed-reducing unit (40), the said rollers co-operating with an annular rolling track provided at the lower part of the support.

FIG.1

FIG.2

EP 0 330 556 B1

FIG.3

FIG.6

FIG.7

FIG. 4

FIG. 5

# FIG.8

# FIG.9

# FIG.10

$F_3$

# FIG. 11

FIG.14

FIG.15

FIG.13

FIG.12

EP 0 330 556 B1

15